(19) Europäisches Patentamt
European Patent Office
Office européen des brevets

(11) **EP 2 121 293 B1**

(12) **EUROPÄISCHE PATENTSCHRIFT**

(45) Veröffentlichungstag und Bekanntmachung des Hinweises auf die Patenterteilung:
**22.02.2012 Patentblatt 2012/08**

(21) Anmeldenummer: **07822300.5**

(22) Anmeldetag: **07.11.2007**

(51) Int Cl.:
**B29D 30/00** (2006.01)     **B29D 30/26** (2006.01)
**F16H 1/46** (2006.01)     **F16H 49/00** (2006.01)

(86) Internationale Anmeldenummer:
**PCT/EP2007/061986**

(87) Internationale Veröffentlichungsnummer:
**WO 2008/077678 (03.07.2008 Gazette 2008/27)**

(54) **Vorrichtung zum variablen Antreiben einer Hohlwelle mit einer innenliegenden Spindel**

Device for the variable driving of a hollow shaft with an internal spindle

Dispositif d'entraînement variable d'un arbre creux doté d'une broche intérieure

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.12.2006 DE 102006061463**

(43) Veröffentlichungstag der Anmeldung:
**25.11.2009 Patentblatt 2009/48**

(73) Patentinhaber: **Continental Reifen Deutschland GmbH**
**30165 Hannover (DE)**

(72) Erfinder: **LINNE, Stefan**
**30900 Wedemark (DE)**

(74) Vertreter: **Finger, Karsten et al**
**Continental Aktiengesellschaft**
**Patente und Lizenzen**
**Postfach 1 69**
**30001 Hannover (DE)**

(56) Entgegenhaltungen:
**EP-A- 0 744 277     EP-A- 0 984 201**
**DE-A1- 1 729 765     DE-A1-102005 016 803**
**GB-A- 1 421 028     JP-A- 6 206 135**
**JP-A- 11 165 358**

**Beschreibung**

Die Erfindung betrifft eine Vorrichtung zum variablen Antreiben einer Hohlwelle und einer an dieser abgestützten und innenliegenden Welle oder Spindel, insbesondere zum Bewegen von Bestandteilen einer Reifenaufbaumaschine, unter Verwendung von Antriebsvorrichtungen und eines Planetengetriebes oder eines Harmonic-Drive-Getriebes, welches jeweils als Differenzdrehzahlgetriebe aufgebaut ist.

Bei Maschinen zur Herstellung und zum Aufbau von Fahrzeugluftreifen ist es üblich, eine Hohlwelle mit innenliegender und an dieser abgestützten Spindel einzusetzen, um über eine Bewegung der Spindel beispielsweise Bombierköpfe positionieren zu können und um über die Hohlwelle die Reifenaufbaumaschine in eine Drehbewegung, beispielsweise zum Anrollen des Gürtelpakets eines Fahrzeugluftreifens, zu versetzen. Dabei muss auch gewährleistet sein, dass die Welle betrieben werden kann, ohne dass die Spindel Bauteile betätigt. Welle und Spindel müssen daher auch synchron bewegbar sein. Bei einer bekannten Reifenaufbaumaschine werden die Welle und die Spindel mit einem oder jeweils mit einem Motor angetrieben und können mittels eines Zahnkupplung beim Drehen der Welle mechanisch aneinander gekoppelt werden. Dadurch ist es jedoch unmöglich, gleichzeitig die Spindel zu betätigen und die Welle zu drehen. Bei dieser bekannten Vorrichtung steht zudem nur ein inkrementales Messsystem für beide Achsen zur Verfügung. Beim Wechsel zwischen den Betriebsarten "Drehen" und "Verspindeln" müssen die Stellungen der Achsen in der Steuerung gesichert und bis zum nächsten Umschalten zwischengespeichert werden. In Folge von Fehlern können Fehlpositionen der Achsen eintreten. Bei einem anderen Mechanismus werden Welle und Spindel jeweils mit einem eigenen Motor angetrieben. Soll nur die Welle verdreht werden, werden beide Motoren synchron betrieben. Bei diesem Synchronlauf ist jedoch ein Schleppfehler kaum vermeidbar und damit auch eine gegenseitige Verstellung der Welle und der Spindel zueinander. Dies hat beispielsweise ein ungewolltes Verschieben der Stellung der Bombierköpfe zur Folge.

Eine Vorrichtung der eingangs genannten Art ist beispielsweise aus der JP 11 165358 A bekannt. Die Vorrichtung dient zur Verstellung des Durchmessers einer Reifenaufbautrommel und verwendet zwei Planetengetriebe. Bei der aus der GB-A-1 421 028 bekannten Vorrichtung werden zwei Differenzdrehzahlgetriebe zum Messen der Verdrehung einer inneren und einer äußeren Welle zueinander genutzt. Innere und äußere Welle sind über eine Kupplung mit einem Antrieb miteinander verbindbar.

Der Erfindung liegt die Aufgabe zu Grunde, eine Vorrichtung der eingangs genannten Art derart auszuführen, dass ein exakter Synchronlauf aber auch ein gesondertes Betätigen der Hohlwelle und der Welle/Spindel möglich sind.

Gelöst wird die gestellte Aufgabe erfindungsgemäß dadurch, dass ein einziges Planeten-Getriebe oder Harmonic-Drive-Getriebe vorgesehen ist, welches ein drehbar gelagertes Gehäuse aufweist, welches mit der Hohlwelle oder mit der Welle oder Spindel derart mittels Übersetzungselementen, wie Zahnriemen und Zahnräder, gekoppelt ist, dass ein Synchronlauf der Hohlwelle mit der Welle oder Spindel über eine einzige, die Hohlwelle antreibende Antriebseinrichtung erfolgt.

Vorteilhafte Weiterbildungen der Erfindung sind Gegenstand der abhangigen Ausprüche.

Die Koppelung der Hohlwelle mit der Welle oder Spindel über ein Planetengetriebe oder ein Harmonic-Drive-Getriebe ermöglicht es, für einen Synchronlauf von Hohlwelle und Welle oder Spindel eine einzige Antriebseinrichtung zu verwenden, wobei durch die Auslegung der vorgesehenen Übersetzungen Hohlwelle und Welle oder Spindel mit einer exakt übereinstimmenden Drehzahl in Drehung versetzbar sind.

Die bei einer Weiterbildung der erfindungsgemäßen Vorrichtung vorgesehene zweite Antriebseinrichtung wirkt auf das Sonnenrad des Planetengetriebes. Diese Maßnahmen erlauben es, die Übersetzungsverhältnisse zu wählen und die Anzahl der für die Übersetzung notwendigen Getriebebestandteile, wie Zahnräder und Zahnriemen, gering zu halten sowie eine zuverlässige und langlebige Funktion der Vorrichtung zu gewährleisten.

Eine hinsichtlich der Übersetzung der Vorrichtung sehr günstige Konstruktion ergibt sich, wenn die Antriebseinrichtung, welche die Hohlwelle antreibt, auch auf den Planetenradträger wirkt und diesen antreibt.

Bei einer bevorzugten Auslegung der zur erfindungsgemäßen Vorrichtung gehörenden Getriebeanordnung ist vorgesehen, dass für einen Synchronlauf von Hohlwelle und Welle oder Spindel bei feststehendem Sonnenrad des Planetengetriebes die Drehbewegung der Hohlwelle über das Hohlrad auf dem Planetenradträger und von diesem auf die Welle oder Spindel mit entsprechender Übersetzung übertragen wird. Bei dieser Ausführungsform ist für eine Drehbewegung der Welle oder Spindel bei feststehender Hohlwelle und feststehendem Hohlrad des Planetengetriebes vorgesehen, dass das Sonnenrad angetrieben wird, sodass dessen Drehbewegung über den Planetenradträger auf die Welle oder Spindel übertragen wird.

Besonders gering ist die Anzahl der vorgesehenen Getriebebestandteile bei einer Ausführung, bei der für einen Synchronlauf von Hohlwelle und Welle oder Spindel bei feststehendem Sonnenrad des Planetengetriebes eine Drehbewegung des angetriebenen Planetenradträgers über das Hohlrad und das Gehäuse des Planetengetriebes auf die Welle oder Spindel, mit entsprechender Übersetzung, übertragen wird. Bei dieser Ausführungsvariante ist für eine Drehbewegung der Welle oder Spindel bei feststehender Hohlwelle und feststehendem Planetenradträger des Planetengetriebes vorgesehen, das Sonnenrad anzutreiben, dessen Drehbewegung über das Planetenrad auf das Hohlrad und das Gehäuse des Planetengetriebes und über diese Teile auf die Welle oder Spindel übertragen wird.

Als Antriebseinrichtungen eignen sich insbesondere Motoren, wobei auch vorgesehen sein kann, als Antriebseinrichtung für das Sonnenrad des

Planetengetriebes einen pneumatischen Drehzylinder einzusetzen. Diese Antriebseinrichtung eignet sich insbesondere für den Fall, dass nur kleine Drehwinkel für die Welle oder Spindel erforderlich sind.

Weitere Merkmale, Vorteile und Einzelheiten der Erfindung werden nun anhand der Zeichnung, die ein Ausführungsbeispiel darstellt, näher beschrieben. Dabei zeigen,

Fig. 1 eine Prinzipskizze einer Ausführungsform der erfindungsgemäßen Vorrichtung und

Fig. 2 eine Prinzipskizze einer anderen Ausführungsvariante.

Die erfindungsgemäße Vorrichtung gestattet auf besonders zuverlässige und zweckmäßige Weise einen synchronen Antrieb einer Hohlwelle und einer in dieser befindlichen an der Hohlwelle abgestützten Welle oder Spindel. Ein bevorzugter Einsatz der Vorrichtung ist daher bei Reifenaufbaumaschinen, wobei beispielsweise die Hohlwelle die Reifenaufbaumaschine in Drehung versetzt, um etwa das Gürtelpaket eines Fahrzeugluftreifens anzurollen, und wobei die Spindel in bekannter Weise beispielsweise Bombierköpfe in axialer Richtung gegeneinander verstellt.

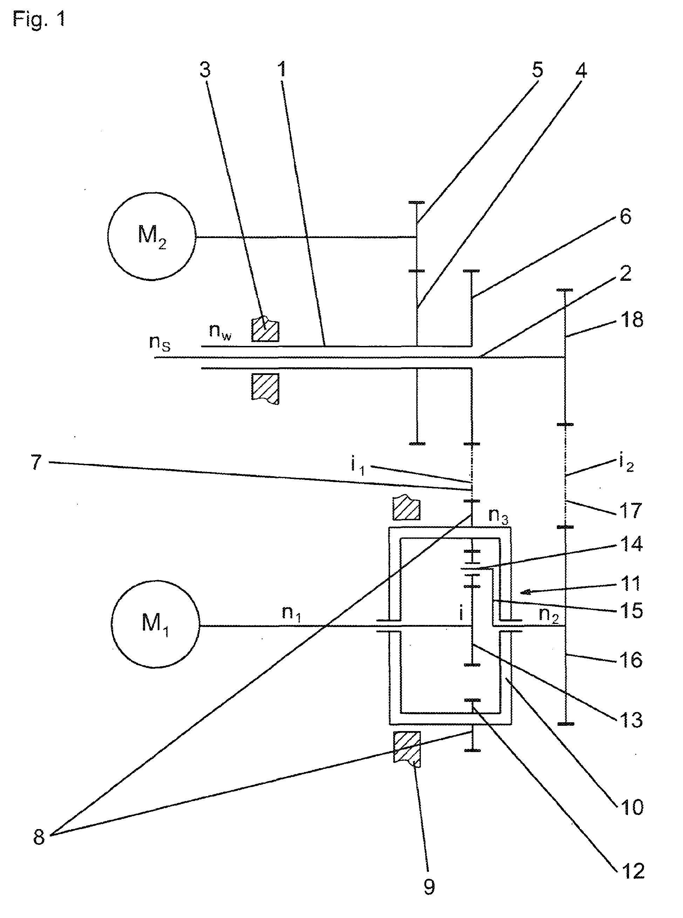

In der in Fig. 1 gezeigten Prinzipskizze sind mit 1 eine Hohlwelle, mit 2 eine innenliegende Spindel und mit 3 die Lagerung für die Hohlwelle 1 bezeichnet. Die Spindel 2 ist auf nicht gezeigte Weise an der Hohlwelle 1 abgestützt, sodass bei einer Drehbewegung der Welle 1 gleichzeitig die Spindel 2 in Drehung versetzt wird. Mit der Welle 1 ist ein Zahnrad 4 fest verbunden, welches mit einem weiteren Zahnrad 5 in Eingriff steht, welches von einem Motor $M_2$ in Rotation versetzbar ist. Ein weiteres, mit der Welle 1 fest verbundenes Zahnrad 6 ist über einen Zahnriemen 7 mit einem Zahnrad 8 gekoppelt, welches auf einem Gehäuse 10 eines Planetengetriebes 11 sitzt und mit diesem fest verbunden ist. Mit 9 ist die Lagerung für das Gehäuse 10 des Planetengetriebes 11 bezeichnet. Ein an der Innenseite des Gehäuses 10 umlaufendes und mit diesem fest verbundenes Hohlrad 12 steht in Eingriff mit zumindest einem Planetenrad 14, welches an einem Planetenradträger 15 angeordnet ist, welcher aus dem Gehäuse 10, mit der Achse des Planetengetriebes 11 fluchtend, nach außen geführt ist und hier ein Zahnrad 16 trägt. Das Zahnrad 16 ist über einen Zahnriemen 17 an ein Zahnrad 18 gekoppelt, welches mit der Spindel 2 fest verbunden ist.

Das Sonnenrad 13 des Planetengetriebes 11 ist mittels eines außerhalb des Planetengetriebes 11 befindlichen Motors $M_1$ antreibbar und greift in das Planetenrad 14 ein.

Es gibt eine Vielzahl von Möglichkeiten des Betriebes der Vorrichtung, insbesondere durch ein gesondertes oder ein gemeinsames Betreiben der Motoren $M_1$ und $M_2$. Im Folgenden werden beispielhaft drei wesentliche Betriebsarten näher erläutert. Nachdem sich die in der Hohlwelle 1 befindliche Spindel 2 gegen die Hohlwelle 1 abstützt ist eine wichtige Betriebsart jene, bei welcher die Hohlwelle 1 und die Spindel 2 synchron in Drehung versetzt werden, um beispielsweise über die Hohlwelle 1 eine Reifenaufbautrommel in Rotation zu versetzen, wobei jedoch die Spindel 2 ihre Stellung gegenüber der Hohlwelle 1, beispielsweise zum Beibehalten der Position von Bombierköpfen, nicht ändern soll. Für diese Betriebsart wird der Motor $M_2$ in Betrieb genommen und setzt über die Zahnräder 4 und 5 die Welle 1 mit der Drehzahl nw in Drehung. Das mit der Welle 1 verbundene Zahnrad 6 überträgt die Drehbewegung der Welle 1 über den Zahnriemen 7 auf das Zahnrad 9 und somit auf das Gehäuse 10, welches mit einer Drehzahl $n_3$ in eine Drehbewegung versetzt wird. Das mit dem Gehäuse 10 fest verbundene Hohlrad 12 versetzt das mit ihm in Eingriff stehende Planetenrad 14 in Drehbewegung, welches dabei gegenüber dem feststehenden Sonnenrad 13 entlang des Hohlrades 12 und zwischen dem Hohlrad 12 und dem Sonnenrad 13 umläuft. Dadurch wird der Planetenradträger 15 in Drehbewegung versetzt, sein mit der Achse des Sonnenrades 13 fluchtender Kurbelteil versetzt mit einer Drehzahl $n_2$ das Zahnrad 16 in Drehbewegung, welches diese Drehbewegung über den Zahnriemen 17 auf das Zahnrad 18 überträgt, welches mit der Spindel 2 fest verbunden ist und diese mit der Drehzahl $n_S$ in Rotation versetzt.

Mit

i: Übersetzung des Planetengetriebes 11
$i_1$: Übersetzung der Welle 1 zum Gehäuse 10 des Planetengetriebes 11
$i_2$: Übersetzung der Spindel 2 zum Planetenradträger 15 des Planetengetriebes 11

gilt für das Planetengetriebe 11 folgende Beziehung:

$$(1) \qquad n_1 - i \times n_2 - (1 - i) \times n_3 = 0$$

Die Drehzahl $n_1$ des Sonnenrades 13 des Planetengetriebes 11 ist beim Stillstand des Motors $M_1$, wenn nur

der Motor $M_2$ betrieben wird, Null und es gelten:

$$(2) \qquad \frac{i-1}{i} = \frac{n_2}{n_3} \quad \text{und } i_1 = \frac{n_3}{n_w} \quad \text{und } i_2 = \frac{n_2}{n_s} \quad \text{und } 1 = \frac{n_w}{n_s}$$

Für die Übersetzungen $i_1$, $i_2$ zwischen Welle 1 und Spindel 2 einerseits und dem Planetengetriebe 11 andererseits gilt die Beziehung

$$(3) \qquad i_1 = i_2 \times \frac{i-1}{i}$$

Aus den Übersetzungen ergibt sich für den Motor $M_1$ folgendes Übersetzungsverhältnis zur Spindel 2:

$$(4) \qquad i_{ges} = i \times i_2 \frac{n_1}{n_s}$$

Für den oben erwähnten Fall, dass bei einem alleinigen Betrieb des Motors $M_2$ Welle 1 und Spindel 2 synchron in Drehung versetzt sein sollen ist $n_w$ (Drehzahl der Welle) gleich $n_s$ (Drehzahl der Spindel 2). Die Übersetzungsverhältnisse der beteiligten Zahnräder und -riemen werden entsprechend aufeinander abgestellt.

Bei einer weiteren möglichen Betriebsart wird lediglich die Spindel 2 gegenüber der Hohlwelle 1 in Drehbewegung versetzt. In diesem Fall betreibt der Motor $M_1$ das Sonnenrad 13 des Planetengetriebes 11, das Hohlrad 12 ist der feststehende Bestandteil des Planetengetriebes 11. Das Planetenrad 14, welches sowohl mit dem Sonnenrad 13 als auch mit dem Hohlrad 12 in Eingriff steht, läuft zwischen Sonnenrad 13 und Hohlrad 12 ab und setzt dadurch den kurbelartigen Planetenradträger 15 mit der Drehzahl $n_2$ in Drehbewegung. Der Planetenradträger 15 betreibt das Zahnrad 16, welches über den Zahnriemen 14 das Zahnrad 18 in Drehbewegung versetzt, welches die Spindel 2 dreht. Möglich ist auch ein gemeinsamer Betrieb der Motoren $M_1$ und $M_2$,um die Welle 1 gegenüber der innenliegenden Spindel 2 nicht synchron in Bewegung zu versetzen. Je nach Drehrichtung der Servomotoren $M_1$ und $M_2$ gibt es eine Vielzahl möglicher Betriebsarten der Getriebeanordnung, insbesondere durch die Wahl der Drehzahl $n_w$ der Welle 1, und der Drehzahl $n_1$ des Sonnenrades 13, der Drehzahl $n_2$ des Planetenträgers 15 und der Drehzahl $n_s$ der Spindel 2.

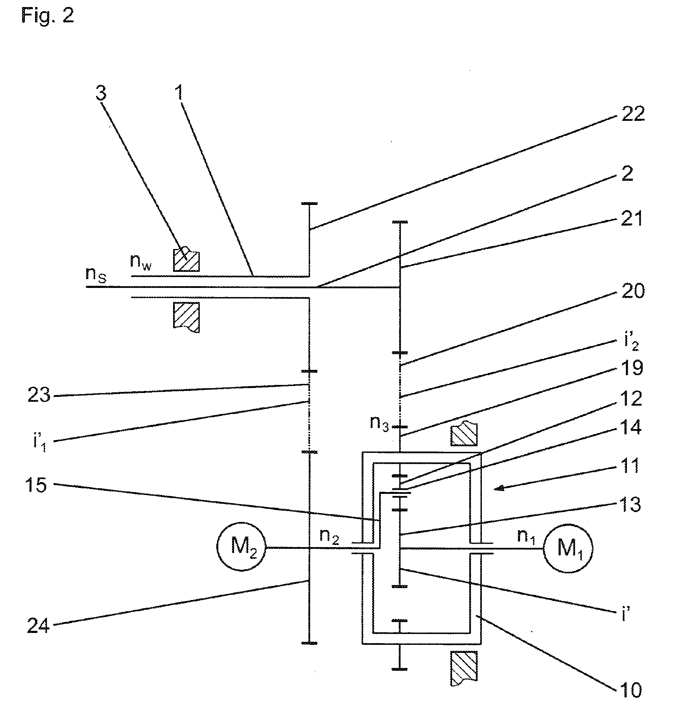

Auch in der in Fig. 2 gezeigten Prinzipskizze einer weiteren Ausführungsform sind mit 1 die Hohlwelle, mit 2 die innenliegende Spindel, welche an der Hohlwelle 1 auf nicht gezeigte Weise abgestützt ist, und mit 3 die Lagerung für die Hohlwelle 1 bezeichnet. Mit der Welle 1 ist ein Zahnrad 22 fest verbunden, welches über einen Zahnriemen 23 mit einem weiteren Zahnrad 24 gekoppelt ist, welches von einem Motor $M_2$ in Rotation versetzbar ist. Der Motor $M_2$ treibt gleichzeitig den Planetenradträger 15 des auch bei dieser Ausführungsform vorhandenen Planetengetriebes 11 an. Der Planetenradträger 15 versetzt zumindest das eine Planetenrad 14 zwischen dem Hohlrad 12, welches mit dem Gehäuse 10 des Planetengetriebes 11 fest verbunden ist, und dem Sonnenrad 13 in Bewegung. Ein am Gehäuse außen angeordnetes Zahnrad 19 ist unter Zwischenschaltung eines Zahnriemens 20 mit einem Zahnrad 21 in Verbindung, welches mit der Spindel 2 fest verbunden ist. Der zweite Motor, der Motor $M_1$, ist dafür vorgesehen, das Sonnenrad 13 des Planetengetriebes 11 anzutreiben. Mit $n_w$ ist die Drehzahl der Hohlwelle 1, mit $n_s$ die Drehzahl der Spindel 2, mit $n_1$ die Drehzahl des Sonnenrades 13 des Planetengetriebes 11, mit $n_2$ die Drehzahl des Planetenradträger 15 des Planetengetriebes 11 und mit $n_3$ die Drehzahl des Gehäuses 10 des Planetengetriebes 11 bezeichnet.

Auch bei dieser Ausführungsvariante gibt es eine Vielzahl von Möglichkeiten des Betriebes der Vorrichtung durch gesondertes oder gemeinsames Betreiben der Motoren $M_1$ und $M_2$. Im Folgenden werden dabei nur der alleinige Betrieb des Motors $M_2$ und der alleinige Betrieb des Motors $M_1$ kurz beschrieben. Der alleinige Betrieb des Motors $M_2$ bewirkt bei entsprechender Einstellung der Übersetzungsverhältnisse der beteiligten Zahnräder- und riemen eine Synchronbewegung der Hohlwelle 1 und der Spindel 2 mit übereinstimmenden Drehzahlen $n_w$ und $n_s$. Der Motor $M_2$ setzt über das Zahnrad 24, den Zahnriemen 23 und das Zahnrad 22 die Hohlwelle 1 mit der Drehzahl $n_w$ in Drehung. Bei feststehendem Sonnenrad 13, der Motor $M_1$ ist nicht in Betrieb, versetzt der Motor $M_2$ gleichzeitig mit der Drehzahl $n_2$

den Planetenradträger 15 und damit das Planetenrad 14 in Bewegung. Dadurch wird über das Gehäuse 10 das Zahnrad 19 in Drehbewegung versetzt, wobei diese Drehbewegung über den Zahnriemen 20 auf das Zahnrad 21 und von dort auf die Spindel 2 übertragen wird.

Soll lediglich die Spindel 2 gegenüber der Hohlwelle 1 in Drehbewegung versetzt werden, wird bei stillstehendem Motor $M_2$ der Motor $M_1$ in Betrieb genommen, welcher das Sonnenrad 13 des Planetengetriebes 11 antreibt, wobei der Planetenradträger 15 nun der feststehende Bestandteil des Planetengetriebes 11 ist. Das Sonnenrad 13 setzt das Planetenrad 14 in Drehbewegung, welches seine Bewegung auf das Hohlrad 12 und somit auf das Gehäuse 10 und das Zahnrad 19 überträgt. Das Zahnrad 19 ist über den Zahnriemen 20 mit dem Zahnrad 21 gekoppelt, welches die Spindel 2 in Drehbewegung versetzt.

Mit

i': Übersetzung des Planetengetriebes 11
$i_1$': Übersetzung der Welle 1 zum Planetenradträger 15 des Planetengetriebes 11
$i_2$': Übersetzung der Spindel 2 zum Gehäuse 10 des Planetengetriebes 11

gilt für das Planetengetriebe 11 folgende Beziehung:

$$(5) \qquad n_1 - i' \times n_2 - (1 - i') \times n_3 = 0$$

Damit sich beim Stillstand des Motors $M_1$ die Welle 1 und die Spindel 2 zueinander nicht bewegen ist $n_1$ gleich Null und es gelten

$$(6) \qquad \frac{i'-1}{i'} = \frac{n_2}{n_3} \quad \text{und} \quad i_1' = \frac{n_3}{n_w} \quad \text{und} \quad i_2' = \frac{n_2}{n_s} \quad \text{und} \quad 1 = \frac{n_w}{n_s}$$

Für die Übersetzungen $i_1$', $i_2$' zwischen Welle 1 und Spindel 2 einerseits und dem Planetengetriebe 11 andererseits gilt

$$(7) \qquad i_2' = i_1' \times \frac{i'-1}{i'}$$

Auch bei dieser Ausführungsvariante ist eine Anzahl weiterer möglicher Betriebsarten je nach Drehrichtung der Motoren $M_1$ und $M_2$ und je nach Wahl der Drehzahlen möglich.

Für bestimmte Anwendungsfälle sind lediglich kleine Drehwinkel der Spindel 2, beispielsweise um einen Winkel von 30° bis 45°, erforderlich. Für den Fall, dass keine ganzen Umdrehungen der Spindel 2 veranlasst werden müssen, kann der Motor $M_1$ auch durch einen pneumatischen Drehzylinder ersetzt werden.

Sind große Übersetzungsverhältnisse erforderlich, so kann das gezeigte Planetenradgetriebe durch ein sogenanntes Harmonic-Drive-Getriebe ersetzt werden.

Es gibt eine Anzahl weiterer vorteilhafter Anwendungen der erfindungsgemäßen Vorrichtung bei Reifenaufbaumaschinen. Dazu gehört beispielsweise das Durchführen des Einfallens einer sogenannten Klapptrommel auf der ersten Stufe von Reifenaufbaumaschinen. Bei einer Klapptrommel wird zwischen dem Wickeldurchmesser und dem Durchmesser zur Entnahme der Karkasse umgeschaltet. Dies geschieht durch ein Verdrehen einer inneren und einer äußeren Welle, der Antrieb der Wellen kann gemäß der Erfindung erfolgen. Eine weitere Anwendungsmöglichkeit besteht bei der Durchmesserverstellung an Aufbautrommeln von Reifenaufbaumaschinen. In diesem Fall kann auf die innere Welle eine Spindel aufgebracht werden, welche sich an der äußeren Welle abstützt, sodass über einen Konus oder Hebel, welcher um die äußere Welle angeordnet ist, der äußere Durchmesser einer segmentierten Trommel verstellt werden kann, um Reifen unterschiedlicher Größe fertigen zu können. Die Breite von Aufbautrommeln bei Reifenaufbaumaschinen lässt sich verstellen, indem man auf die innere Welle eine Spindel aufbringt, welche sich an der äußeren Welle abstützt.

**Patentansprüche**

1.  Vorrichtung zum variablen Antreiben einer Hohlwelle (1) und einer an dieser abgestützten und innenliegenden Welle oder Spindel (2), insbesondere zum Bewegen von Bestandteilen einer Reifenaufbaumaschine, unter Verwendung von Antriebsvorrichtungen ($M_1$, $M_2$) und eines Planetengetriebes (11) oder eines Harmonic-Drive-Getriebes, welches jeweils als Differenzdrehzahlgetriebe aufgebaut ist,
    **dadurch gekennzeichnet,**
    **dass** ein einziges Planeten-Getriebe (11) oder Harmonic-Drive-Getriebe vogesehen ist, welches ein drehbar gelagertes Gehäuse (10) aufweist, welches mit der Hohlwelle (1) oder mit der Welle oder Spindel (2) derart mittels Übersetzungselementen, wie Zahnriemen und Zahnräder, gekoppelt ist, dass ein Synchronlauf der Hohlwelle (1) mit der Welle oder Spindel (2) über eine einzige, die Hohlwelle (1) antreibende Antriebseinrichtung ($M_2$) erfolgt.

2.  Vorrichtung nach Anspruch 1, **dadurch gekennzeichnet, dass** die Antriebseinrichtung ($M_2$) für einen Synchronlauf auch den Planetenradträger (15) antreibt.

3.  Vorrichtung nach Anspruch 1 oder 2, **dadurch gekennzeichnet, dass** eine zweite Antriebseinrichtung ($M_1$) zum Antreiben des Sonnenrades (13) des Planetengetriebes (11) vorgesehen ist.

4.  Vorrichtung nach Anspruch 1 oder 2, **dadurch gekennzeichnet, dass** für einen Synchronlauf von Hohlwelle (1) und Welle oder Spindel (2) bei feststehendem Sonnenrad (13) des Planetengetriebes (11) die Drehbewegung der Hohlwelle (1) über das Hohlrad (12) auf den Planetenradträger (15) und von diesem auf die Welle oder Spindel (2), mit entsprechender Übersetzung, übertragbar ist.

5.  Vorrichtung nach Anspruch 1 oder 2, **dadurch gekennzeichnet, dass** für eine Drehbewegung der Welle oder Spindel (2) bei feststehender Hohlwelle (1) und feststehendem Hohlrad (12) des Planetengetriebes (11) das Sonnenrad (13) angetrieben wird, sodass dessen Drehbewegung über den Planetenradträger (15) auf die Welle oder Spindel (2) übertragbar ist.

6.  Vorrichtung nach einem der Ansprüche 1 bis 3, **dadurch gekennzeichnet, dass** für einen Synchronlauf von Hohlwelle (1) und Welle oder Spindel (2) bei feststehendem Sonnenrad (13) des Planetengetriebes (11) eine Drehbewegung des angetriebenen Planetenträgers (15) über das Hohlrad (12) und das Gehäuse (10) des Planetengetriebes (11) auf die Welle oder Spindel (2), mit entsprechender Übersetzung, übertragbar ist.

7.  Vorrichtung nach einem der Ansprüche 1 bis 3, **dadurch gekennzeichnet, dass** für eine Drehbewegung der Welle oder Spindel (2) bei feststehender Hohlwelle (1) und feststehendem Planetenradträger (15) des Planetengetriebes (11) das Sonnenrad antreibbar ist, dessen Drehbewegung über das Planetenrad (14) auf das Hohlrad (12) und das Gehäuse (10) des Planetengetriebes (11) und derart auf die Welle oder Spindel (2) übertragbar ist.

8.  Vorrichtung nach einem der Ansprüche 1 bis 7, **dadurch gekennzeichnet, dass** die Antriebseinrichtungen Motoren ($M_1$, $M_2$) sind.

9.  Vorrichtung nach einem der Ansprüche 1 bis 7, **dadurch gekennzeichnet, dass** die Antriebseinrichtung für das Sonnenrad (13) des Planetengetriebes (11) ein pneumatischer Drehzylinder ist.

**Claims**

1.  Device for the variable driving of a hollow shaft (1) and a shaft or spindle (2) that is supported thereon and lies inside it, in particular for moving component parts of a tire building machine, by using drive devices ($M_1$, $M_2$), and a planetary gear (11) or a harmonic drive gear which is respectively constructed as a differential speed gear, **characterized in that** there is provided a single planetary gear (11) or harmonic drive gear which has a rotatably mounted housing (10) which is coupled to the hollow shaft (1) or the shaft or spindle (2) by means of speed-change elements, such as toothed belts and tooth wheels, so as to produce synchronous running of the hollow shaft (1) with the shaft or spindle (2) via a single drive device ($M_2$) driving the hollow shaft (1).

2.  Device according to Claim 1, **characterized in that** the drive device ($M_2$) for synchronous running also drives the planet pinion carrier (15).

**3.** Device according to Claim 1 or 2, **characterized in that** a second drive device ($M_1$) is provided for driving the sun wheel (13) of the planetary gear (11).

**4.** Device according to Claim 1 or 2, **characterized in that**, for synchronous running of hollow shaft (1) and shaft or spindle (2) in conjunction with a fixed sun wheel (13) of the planetary gear (11), it is possible for the rotary movement of the hollow shaft (1) to be transmitted via the hollow wheel (12) to the planet pinion carrier (15), and from the latter to the shaft or spindle (2), this being done with appropriate speed transformation.

**5.** Device according to Claim 1 or 2, **characterized in that** for a rotary movement of the shaft or spindle (2) in conjunction with a fixed hollow shaft (1) and fixed hollow wheel (12) of the planetary gear (11), the sun wheel (13) is driven such that the rotary movement thereof can be transmitted via the planet pinion carrier (15) to the shaft or spindle (2).

**6.** Device according to one of Claims 1 to 3, **characterized in that** for synchronous running of hollow shaft (1) and shaft or spindle (2) in conjunction with a fixed sun wheel (13) of the planetary gear (11), it is possible for a rotary movement of the driven planet carrier (15) to be transmitted via the hollow wheel (12) and the housing (10) of the planetary gear (11) to the shaft or spindle (2), this being done with appropriate speed transformation.

**7.** Device according to one of Claims 1 to 3, **characterized in that**, for a rotary movement of the shaft or spindle (2) in conjunction with a fixed hollow shaft (1) and fixed planet pinion carrier (15) of the planetary gear (11), it is possible to drive the sun wheel whose rotary movement can be transmitted via the planet pinion (14) to the hollow wheel (12) and the housing (10) of the planetary gear (11), and in this way to the shaft or spindle (2).

**8.** Device according to one of Claims 1 to 7, **characterized in that** the drive devices are motors ($M_1$, $M_2$).

**9.** Device according to one of Claims 1 to 7, **characterized in that** the drive device for the sun wheel (13) of the planetary gear (11) is a pneumatic rotary cylinder.

**Revendications**

**1.** Dispositif pour l'entraînement variable d'un arbre creux (1) et d'un arbre ou d'une broche (2) supporté (e) sur celui-ci et disposé(e) à l'intérieur de celui-ci, notamment pour le déplacement de constituants d'une machine de construction de pneumatiques, utilisant des dispositifs d'entraînement ($M_1$, $M_2$) et une transmission planétaire (11) ou une transmission harmonique, qui est construite à chaque fois sous forme de transmission à régime différentiel, **caractérisé en ce qu'**il est prévu une transmission planétaire unique (11) ou une transmission harmonique qui présente un boîtier (10) monté à rotation, qui est accouplé à l'arbre creux (1) ou à l'arbre ou à la broche (2) par le biais d'éléments de multiplication, tels que des courroies dentées et des pignons, de telle sorte qu'un entraînement synchrone de l'arbre creux (1) avec l'arbre ou la broche (2) ait lieu par le biais d'un dispositif d'entraînement unique ($M_2$), entraînant l'arbre creux (1).

**2.** Dispositif selon la revendication 1, **caractérisé en ce que** le dispositif d'entraînement ($M_2$), en vue d'un entraînement synchrone, entraîne aussi le porte-satellites (15).

**3.** Dispositif selon la revendication 1 ou 2, **caractérisé en ce qu'**il est prévu un deuxième dispositif d'entraînement ($M_1$) pour l'entraînement de la roue solaire (13) de la transmission planétaire (11).

**4.** Dispositif selon l'une quelconque des revendications 1 ou 2, **caractérisé en ce que** pour un entraînement synchrone de l'arbre creux (1) et de l'arbre ou de la broche (2), lorsque la roue solaire (13) de la transmission planétaire (11) est fixe, le mouvement de rotation de l'arbre (1) peut être transmis par le biais de la couronne dentée (12) au porte-satellites (15) et de celui-ci à l'arbre ou à la broche (2), avec une multiplication correspondante.

**5.** Dispositif selon la revendication 1 ou 2, **caractérisé en ce que** pour un mouvement de rotation de l'arbre ou de la broche (2), lorsque l'arbre creux (1) est fixe et que la couronne dentée (12) de la transmission planétaire (11) est fixe, la roue solaire (13) est entraînée, de telle sorte qu'un mouvement de rotation puisse être transmis par le biais du porte-satellites (15) à l'arbre ou à la broche (2).

**6.** Dispositif selon l'une quelconque des revendications 1 à 3, **caractérisé en ce que** pour un entraînement synchrone de l'arbre creux (1) et de l'arbre ou de la broche (2) lorsque la roue solaire (13) de la transmission planétaire (11) est fixe, un mouvement de rotation du porte-satellites (15) entraîné peut être transmis par le biais de la couronne dentée (12) et du boîtier (10) de la transmission planétaire (11) à l'arbre ou à la broche (2), avec une multiplication correspondante.

7. Dispositif selon l'une quelconque des revendications 1 à 3, **caractérisé en ce que** pour un mouvement de rotation de l'arbre ou de la broche (2) lorsque l'arbre creux (1) est fixe et que le porte-satellites (15) de la transmission planétaire (11) est fixe, la roue solaire peut être entraînée, son mouvement de rotation pouvant être transmis par le biais du pignon planétaire (14) à la couronne dentée (12) et au boîtier (10) de la transmission planétaire (11) et de ce fait à l'arbre ou à la broche (2).

8. Dispositif selon l'une quelconque des revendications 1 à 7, **caractérisé en ce que** les dispositifs d'entraînement sont des moteurs ($M_1$, $M_2$).

9. Dispositif selon l'une quelconque des revendications 1 à 7, **caractérisé en ce que** le dispositif d'entraînement pour la roue solaire (13) de la transmission planétaire (11) est un cylindre rotatif pneumatique.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11165358 A

- GB 1421028 A